# EUROPÄISCHE PATENTSCHRIFT

(11) **EP 2 915 618 B1**
(45) Veröffentlichungstag und Bekanntmachung des Hinweises auf die Patenterteilung: **02.05.2018**
(21) Anmeldenummer: 15158006.5
(22) Anmeldetag: 06.03.2015
(51) Int. Cl.: B23K 11/11, B25B 7/08

(54) **ZANGE ODER SCHERE**
PLIERS OR SCISSORS
PINCE OU CISEAUX

(30) Priorität: 06.03.2014 DE 102014102986
(43) Veröffentlichungstag der Anmeldung: 09.09.2015
(73) Patentinhaber: Orbis Will GmbH + Co. KG, 48683 Ahaus (DE)
(72) Erfinder: Groten, Andreas H., 48683 Ahaus (DE)
(74) Vertreter: Müller, Enno

(56) Entgegenhaltungen:
- DE-A1- 19 737 129
- DE-U1- 29 912 580
- US-A- 3 559 515

## Beschreibung

Die Erfindung betrifft eine Zange oder Schere gemäß dem Oberbegriff des Anspruchs 1, hinsichtlich einer Zange insbesondere in Form einer Schneidzange, Greifzange oder Crimpzange, mit einem ersten und einem zweiten Zangenschenkel, welche Zangenschenkel sich in einem Gelenkbereich kreuzen, wobei sie auf einer Seite des Gelenkbereichs zusammenwirkende Arbeitsbereiche ausbilden und auf der anderen Seite des Gelenkbereichs Griffschenkel aufweisen, wobei die Zangenschenkel weiter relativ zueinander um eine feststehende Drehachse drehbar verbunden sind, wobei ein feststehender und ein beweglicher Zangenschenkel ausgebildet ist, wobei der bewegliche Zangenschenkel einen Abschnitt aufweist, der zwischen der Drehachse und einer Stützausformung des feststehenden Zangenschenkels aufgenommen ist, wobei weiter bezüglich des Griffbereichs des beweglichen Zangenschenkels in geschlossener Stellung der Zange und gesehen in einer Draufsicht, in welcher im Gelenkbereich der bewegliche Zangenschenkel oberhalb des feststehenden Zangenschenkels liegt, ein in radialer Richtung von der Drehachse gesehen äußerster Punkt gegeben ist, gegebenenfalls an einem dem anderen Griffbereich zugewandten Ende eines Kreisbogenabschnittes, durch welchen ersten Punkt und die sich in der Draufsicht als zweiter Punkt abbildende Drehachse eine Gerade gezogen werden kann, und wobei weiter an beiden Zangenschenkeln zur Drehführung und Aufnahme von Spreizkräften in radialer Richtung bezüglich der Drehachse zusammenwirkende Stützausformungen vorgesehen sind.

Soweit vor- und nachstehend von Zangenschenkeln gesprochen ist, versteht sich, dass diese hinsichtlich einer Schere als Scherenschenkel angesprochen sein können.

Eine derartige Zange ist beispielsweise aus der WO 2006/108804 A1 (US 7,845,255 B2) bekannt. Bei der bekannten Zange sind die Stützausformungen an dem einen Zangenschenkel in Form einer Nut und an dem anderen Zangenschenkel in Form einer in die Nut eingreifenden Rippe gebildet. Die Stützausformungen erstrecken sich bezüglich der genannten Geraden beidseitig der Geraden. Hiermit ist eine relativ aufwendige Gestaltung der Zangenschenkel verbunden.

Im Weiteren sind die Stützausformungen bei der bekannten Zange durch ineinandergreifende Nut- und Rippenausformungen gegeben. Dies erfordert eine genaue Bearbeitung, insbesondere auch im Eingriffsbereich der Nut.

Aus der DE 299 12 580 U1 ist eine Zange bekannt, bei welcher über einen Kreisbogen von ca. 330 Grad, jenseits davon, entsprechende Stützausformungen zusammenwirken. Vergleichbares ist auch aus der US 3,559,515 A und der DE 197 37 129 A1 bekannt. Die US 3,559,515 A zeigt eine Zange ohne überkreuzend geführte Zangenschenkel. DE 299 12 580 U1 und DE 197 37 129 A1 werden als nächstliegender Stand der Technik angesehen. Ausgehend von dem genannten Stand der Technik beschäftigt sich die Erfindung mit der Aufgabe, eine Zange oder Schere anzugeben, die hinsichtlich der Halterung des beweglichen Zangenschenkels an dem feststehenden Zangenschenkel vorteilhaft gestaltet ist und günstig herstellbar ist.

Diese Aufgabe ist beim Gegenstand des Anspruches 1 gelöst, wobei darauf abgestellt ist, dass die Stützausformungen bezogen auf eine von der Geraden ausgehend, auf der Seite, auf welcher bei den Griffbereichen der Griffbereich des feststehenden Zangenschenkels angeordnet ist, um die Drehachse gezogene Kreisbahn von bis zu 270 Grad von der Drehachse gesehen nur jenseits dieser Kreisbahn gebildet sind. Diese Gestaltung lässt eine große Freiheit bezüglich der Ausbildung der Zangenschenkel im Einzelnen. Insbesondere können die Zangenschenkel bezogen etwa auf eine Herstellung mittels Fräsmaschinen, Konturschneiden, z.B. mit Laser, Wasserstrahl oder dergleichen, oder durch Schmieden günstig bearbeitet und gestaltet werden. Dadurch, dass die genannten Stützausformungen nur im Bereich der genannten Kreisbahn, gesehen von der Drehachse, ausgebildet sind, können die Zangenschenkel, insbesondere der bewegliche Zangenschenkel, im Übrigen relativ frei gestaltet werden.

Bevorzugt ist vorgesehen, dass die Stützausformung an dem ersten Zangenschenkel nur an einer bezogen auf die Drehachse und in der Draufsicht gesehen radial äußeren Randkante ausgebildet ist. Hierbei ist bevorzugt auf eine Nut-/Federzusammenwirkung in Richtung einer Draufsicht auf die Zangenschenkel verzichtet. Die radial äußere Randkante des ersten Zangenschenkels ist zugleich eine Stützausformung, die mit einer entsprechenden Innenfläche des zweiten Zangenschenkels (allein) zur Abstützung bei Aufspreizkräften zusammenwirkt.

Der Abschnitt, der zwischen der Drehachse und einer Stützausformung des feststehenden Zangenschenkels ausgebildet ist, ist bevorzugt radial innen auch durch die Drehachse begrenzt. Die Drehachse durchsetzt bevorzugt nicht den beweglichen Zangenschenkel.

Weiter bevorzugt ist der genannte Abschnitt zwischen der Drehachse und der Stützausformung des feststehenden Zangenschenkels im Querschnitt gleichsam in einer Wanne aufgenommen. Der Abschnitt übergreift entsprechend weder die Drehachse noch die Stützausformung des feststehenden Zangenschenkels.

Grundsätzlich ist bevorzugt die Ausbildung der Zange derart vorgesehen, dass bei einem Arbeitseingriff der Zange, also unter Belastung, die Drehachse aufgrund der Spreizkräfte nicht oder jedenfalls nicht wesentlich beansprucht ist. Die Funktion der Drehachse ist vielmehr vorrangig in der Zentrierung der Zangenschenkel zueinander zu sehen.

Bezogen auf die genannte Kreisbahn kann die Stützausformung des feststehenden Zangenschenkels bevorzugt zwischen Radialen, ausgehend von der Drehachse und den Kreisbogen durchsetzend, ausgebildet sein, die den Kreisbogen zwischen Umfangswinkeln von 20 bis 90 Grad (Beginn der Stützausformung) bzw. 70 bis 170 Grad (Ende der Stützausformung) durchsetzen. Die Stützausformung des beweglichen Zangenschenkels, die mit der Stützausformung des feststehenden Zangenschenkels im Zuge einer Bewegung der Zangenschenkel zueinander in Kontakt kommt, ist bevorzugt in einem gleichen Drehwinkelabschnitt, jedoch um den möglichen Öffnungswinkel versetzt zu niedrigeren Drehwinkeln hin, ausgebildet. Der Öffnungswinkel kann beispielsweise zwischen 5 und 60 Grad, gegebenenfalls auch bis hin zu 90 Grad, betragen.

Die Stützausformungen können in einer der Drehachse folgenden Schnittebene auch überlappend zueinander ausgebildet sein. Beispielsweise durch einen Schrägverlauf der zugeordneten Randkanten. Es ergibt sich in Richtung der Drehachse gesehen ein Hinterschnitt.

Andererseits können die Stützausformungen sich auch nur in Richtung der Drehachse erstreckend gebildet sein. Es kann sich also bezogen auf die Drehachse bzw. eine Draufsicht auf die Zange bzw. Schere jeweils um vertikale Flächen handeln. Insbesondere handelt es sich um in einer Verschwenkebene der Zangenschenkel kreisbogenförmig verlaufende Flächen. Die stützende Zusammenwirkung ist hierbei bevorzugt auch nur in einer Richtung senkrecht zu der Drehachse gegeben bzw. stellt sich gegebenenfalls bei entsprechender Belastung der Zange ein.

Die Zange kann auf verschiedene Weise hergestellt sein. Bevorzugt ist eine Herstellung aus einem metallischen Werkstoff, insbesondere aus Stahl. Zunächst ausgehend von Schmiedeteilen, die gegebenenfalls an bestimmten Stellen, etwa im Bereich der Stützausformungen oder der Aufeinanderlage der Zangenschenkel oder im Bereich der Arbeitsbereiche noch ergänzend bearbeitet sind. Es kann sich aber auch in wesentlichen Teilen der Zange um ausgestanzte oder ausgeschnittene, etwa mit Laser ausgeschnittene, Blechteile handeln. Die Zangenschenkel können hinsichtlich der Blechteile beispielsweise sandwichartig zwischen zwei äußeren Blechteilen gefasst sein. Es kann auch ein äußeres Blechteil vorgesehen sein, das nur an einem der Zangenschenkel, etwa dem feststehenden Zangenschenkel, befestigt ist und bei welcher Ausgestaltung sich der bewegliche Zangenschenkel dann gefangen zwischen dem Blechteil und dem feststehenden Zangenschenkel (nur) bewegen kann.

Ergänzend oder alternativ kann auch eine Halterung der Zangenschenkel aneinander durch die Drehachse gegeben sein. Die Drehachse als körperliches Teil kann beispielsweise in den feststehenden Zangenschenkel eingeschraubt sein und anderseitig (oberseitig) einen Übergriffbereich ausbilden, mit welchem sie halternd, unter Zulassung einer erforderlichen Drehbewegung relativ zu dem feststehenden Zangenschenkel, auf dem beweglichen Zangenschenkel aufliegt. Die Drehachse kann vermittels ihres Übergriffbereichs auch unter Zwischenschaltung eines Plattenteils auf dem beweglichen Zangenschenkel aufliegen. Das Plattenteil und/oder der Übergriffbereich können auch nur einseitig auf dem feststehenden Zangenschenkel aufliegen. Das Plattenteil und/der Übergriffbereich bilden dann kein Übergriffteil wie es nachstehend noch in weiterer Einzelheit beschrieben ist, welches unter Übergriff über den beweglichen Zangenschenkel beidseitig zu dem beweglichen Zangenschenkel mit dem feststehenden Zangenschenkel verbunden ist. Jedenfalls das Plattenteil kann aber auch im Sinne des genannten Übergriffteils ausgebildet sein.

Weiter können die Zangenschenkel zwischen den Stützausformungen und der gegebenenfalls durch einen Achskörper gebildeten Drehachse, soweit sie aufeinander liegen, nur ebenflächig aufeinander liegen. Insbesondere können im Gewerbebereich (Gelenkbereich) vergleichsweise großflächige, ebenflächige, aufeinander liegende Gleitbereiche an beiden Zangenschenkeln günstig ausgebildet werden. Die Gleitbereiche können sich (jeweils) in einer Ebene erstrecken, die senkrecht zu der Drehachse verläuft.

Die Zangenschenkel selbst können auch durch flach aufeinanderliegende ebenflächige Teile, oder als ein einziges ebenflächiges Teil, insbesondere ausgebildet als Stanzteil, beispielsweise aber auch als geschnittenes Teil, insbesondere mittels Laser geschnittenes Teil oder Teile, ausgebildet sein.

Die Drehachse ist bei der hier beschriebenen Zange bevorzugt eine reale Drehachse, etwa gebildet durch einen Zylinderkörper. Sie befindet sich weiter bevorzugt unabhängig von ihrer konkreten Ausgestaltung, gegebenenfalls auch als lediglich gedachte Linie, außerhalb der Arbeitsbereiche und zwar griffschenkelseitig außerhalb der Arbeitsbereiche. Grundsätzlich kann sie aber auch so vorgesehen sein, dass sie sich innerhalb der Arbeitsbereiche befindet.

Die Gestaltung des zweiten bzw. beweglichen Zangenschenkels ist in weiterer Einzelheit bevorzugt derart vorgesehen, dass bei fehlendem Eingriff der Zangenschenkel im Bereich der Drehachse ein Herausziehen des ersten Zangenschenkels aus dem zweiten Zangenschenkel ohne Entfernen des Übergriffteils möglich ist. Diese Gestaltung soll zunächst verdeutlichen, wie einfach die Gestaltung der Zangenschenkel in diesem Bereich gegeben sein kann. Sie kann aber auch praktische Bedeutung haben. Etwa hinsichtlich einer einfachen Montage durch Einschieben und nachfolgendes Einsetzen der Drehachse.

Der genannte fehlende Eingriff kann bei einem realen Achsteil, das bevorzugt dann ein Zylinderabschnittskörper ist, und bevorzugt mit keinem der Zangenschenkel verbunden ist, einfach durch Herausnehmen dieses Zylinderteils gegeben sein.

Soweit, wie nachstehend noch weiter erläutert, eine Verbindung des Achsteils mit einem der Zangenschenkel gegeben ist, ist die genannte Bedingung erfüllt, wenn zumindest gedanklich der in den Ausnehmungsbereich des anderen Zangenschenkels hineinragende Bereich entfernt ist.

Die Drehachse kann auch durch eine an dem ersten oder zweiten Zangenschenkel ausgebildete vorstehende und mit einer entsprechenden Ausnehmung an dem zweiten oder ersten Zangenschenkel zusammenwirkende Zylinderausformung oder Verzahnung gegeben sein. In diesem Fall kann die Drehachse mit einem der Zangenschenkel sogleich einteilig angeformt, insbesondere geschmiedet sein.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos, beispielsweise schließt ein Bereich von 20 bis 90 Grad auch 20,1 bis 90 Grad, 20 bis 89,9 Grad, 20,1 bis 89,9 Grad etc. ein. Dies nicht nur zur Einschränkung des Bereiches von unten und/oder oben, sondern auch zur Offenbarung so gefundener singulärer Werte.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine Draufsicht auf die Zange in grundsätzlicher Darstellung, zur Erläuterung der wesentlichen Zusammenhänge;
- Fig. 2: eine perspektivische Ansicht der Zange, mit dem zweiten, feststehenden Zangenschenkel im Vordergrund;
- Fig. 3: eine Ansicht gemäß Figur 2, jedoch mit dem ersten, beweglichen Zangenschenkel im Vordergrund;
- Fig. 4: eine Draufsicht auf die Zange, im Bereich des Zangenkopfes, bei geschlossener Zange, bei oben liegendem zweiten Zangenschenkel;
- Fig. 5: eine Darstellung gemäß Figur 4, bei geöffneter Zange;
- Fig. 6: eine Draufsicht auf die Zange, bei geöffneter Zange, bei oben liegendem ersten Zangenschenkel und bei abgenommenen Übergriffteil;
- Fig. 7: eine Darstellung gemäß Figur 6, jedoch perspektivisch und bei geschlossener Zange;
- Fig. 8: eine Draufsicht auf den zweiten Zangenschenkel alleine, auf die Seite, welche im zusammengesetzten Zustand der Zange im Gelenkbereich von dem beweglichen Zangenschenkel überdeckt ist;
- Fig. 9: eine Draufsicht auf den ersten Zangenschenkel, gesehen auf die im zusammengebauten Zustand eine, gegebenenfalls teilweise von dem Übergriffteil übergriffene, Außenfläche bildende Seite;
- Fig. 10: einen Querschnitt durch die Zange gemäß Figur 4, geschnitten entlang der Linie X - X;
- Fig. 11: eine Darstellung gemäß Figur 6, jedoch mit einem Verzahnungseingriff;
- Fig. 12: eine Draufsicht in prinzipieller Darstellung einer weiteren Ausführungsform der Zange;
- Fig. 12a: eine weitere Abwandlung gegenüber der Zange gemäß Figur 12;
- Fig. 13: eine perspektivische Darstellung der Zange gemäß Figur 12;
- Fig. 14: eine alternative Ausführung betreffend die Figur 10;
- Fig. 15: eine nochmals alternative Ausführung betreffend die Figur 10;
- Fig. 16: eine alternative Ausführungsform betreffend das Übergriffteil;
- Fig. 17: eine mögliche Ausführungsform im Hinblick auf einen Querschnitt durch den Gegenstand gemäß Figur 6, geschnitten entlang der Linie 17 - 17.

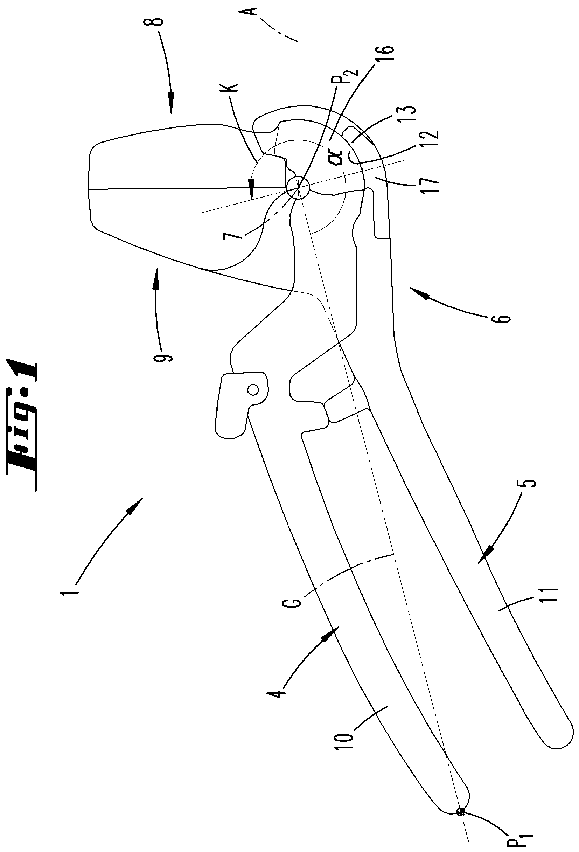

Dargestellt und beschrieben ist, zunächst mit Bezug zu Figur 1, eine schematisch dargestellte Zange 1, die einen ersten, feststehenden Zangenschenkel 5 und einen zweiten, beweglichen Zangenschenkel 4 aufweist. Die Zangenschenkel 4, 5 sind in einem Gelenkbereich 6 drehbar zueinander gelagert. Hierbei sind sie um eine gemeinsame feststehende Drehachse 7, die zunächst als geometrische Achse angesprochen ist, aber auch, wie nachstehend weiter erläutert, eine reale Achse sein kann, zueinander drehbar.

Die Zangenschenkel bilden weiter auf einer Seite des Gelenkbereichs 6 Arbeitsbereiche 8, 9 aus.

Der feststehende Zangenschenkel 5 bildet eine Stützausformung 13 aus, die mit einer Stützausformung 12 des beweglichen Zangenschenkels 4 zusammenwirkt.

In der dargestellten Draufsicht ist bezüglich des Griffbereichs des beweglichen Zangenschenkels 4, in der dargestellten geschlossenen Stellung der Zange 1, in radialer Richtung von der Drehachse 7 gesehen ein äußerster Punkt P₁ gegeben, der grundsätzlich auch auf einem entsprechenden Kreisbogenabschnitt des diesbezüglichen Griffschenkelendes ausgebildet sein kann. Durch diesen äußersten Punkt P₁ und den sich durch die Drehachse ergebenden weiteren Punkt P₂ kann die Gerade G gezogen werden.

Ausgehend von dieser Geraden G kann weiter drehend um die Drehachse 7 bzw. den Punkt P₂ eine Kreisbahn K geschlagen werden, die eine Kreisabschnittslinie bildet. Die Kreisbahn kann, wie dargestellt, einen Winkel α von bis zu 270 Grad abdecken. Bezüglich der Kreisbahn und gesehen von der Drehachse P₂ aus, wobei die Kreisbahn auf der dem beweglichen Zangenschenkel 4 abgewandten Seite der Gerade G gezogen ist, sind die Stützausformungen 12, 13 nur jenseits dieser Kreisbahn ausgebildet. Der Radius der Kreisbahn kann für diese Betrachtung beliebig klein sein.

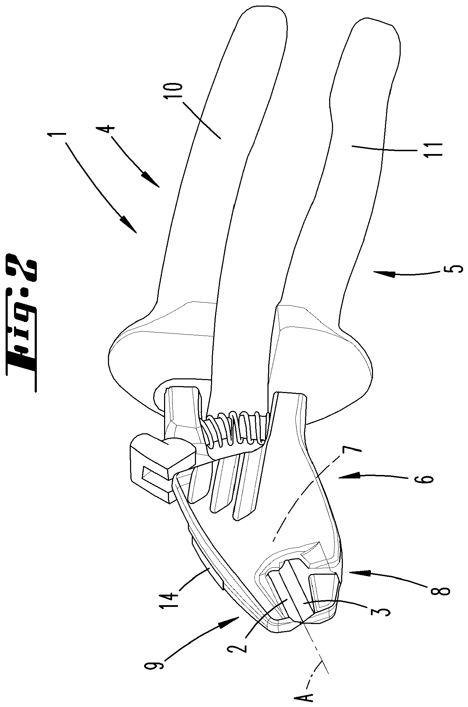

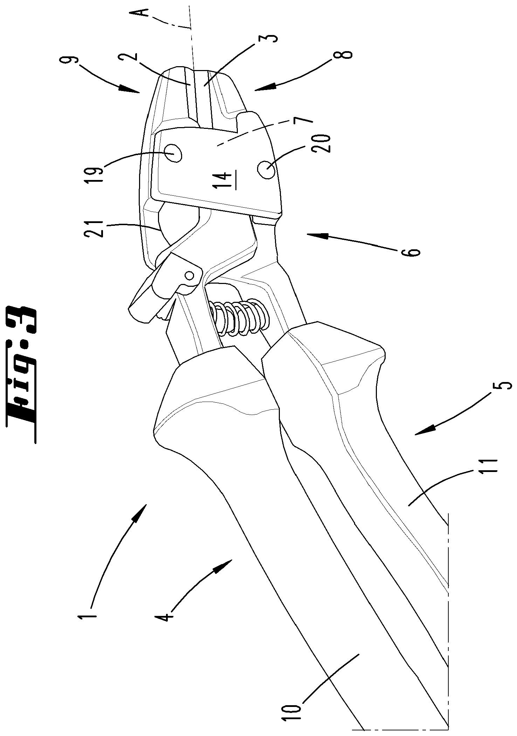

Mit Bezug zu den Figuren 2 und 3, ist eine Zange 1 dargestellt und beschrieben, die beim Ausführungsbeispiel als Schneidzange ausgebildet ist. Sie weist zwei Schneiden 2, 3 auf, welche auch die Arbeitsbereiche der Zange 1 bilden.

Die Zange kann auch, zumindest teilweise, als Backenzange ausgebildet sein. Mit Backen, die, entsprechend einer Kombizange, noch in Schneidbereiche übergehen oder entsprechend einer beispielsweise Wasserpumpenzange insgesamt die Arbeitsbereiche der Zange bilden. Darüber hinaus kann ergänzend oder alternativ die Zange hinsichtlich der Arbeitsbereiche als Crimp- oder Quetschzange ausgebildet sein. Etwa zum Vercrimpen von Aderendhülsen. Darüber hinaus kann die Zange auch beispielsweise als Schneidzange oder Greifzange ausgebildet sein.

Die Zange 1 weist weiter einen ersten, beweglichen Zangenschenkel 4 und einen zweiten, feststehenden Zangenschenkel 5 auf. Die Zangenschenkel 4, 5 kreuzen sich in einem Gelenkbereich 6. Der Gelenkbereich 6 ist beim Ausführungsbeispiel und bevorzugt nicht nur durch eine konkrete Drehachse 7 gebildet, sondern geht darüber hinaus und umfasst auch die Bereiche, in welchen die Zangenschenkel in Richtung der Drehachse oder quer hierzu zusammenwirken.

Auf der einen Seite des Gelenkbereichs sind die bereits genannten zusammenwirkenden Arbeitsbereiche 8, 9 jeweils an einem Zangenschenkel ausgebildet, und auf der anderen Seite des Gelenkbereiches die Griffschenkel 10,11, (die einen Teil der Zangenschenkel 4, 5 bilden).

Die Drehachse 7 ist feststehend, d. h. bei einer Betätigung der Zange wandert sie nicht etwa in Längsrichtung der Zange. Um die Drehachse 7 sind die Zangenschenkel 4, 5 zueinander drehbar. Die Drehachse 7 ist auch bevorzugt unverstellbar.

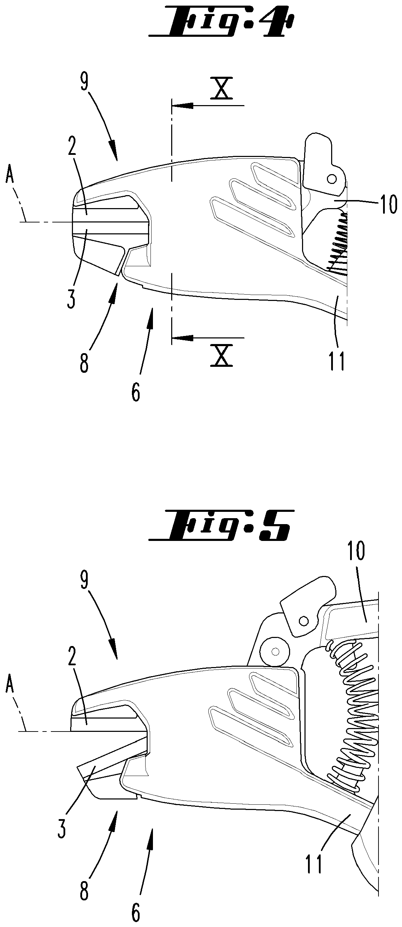

Im geschlossenen Zustand der Zange, wie er etwa in Figur 2 dargestellt ist, und bezogen auf eine Draufsicht auf die Zange wie sie etwa in Figur 4 dargestellt ist, sind die Arbeitsbereiche 8, 9 beidseitig einer von der Drehachse 7 ausgehenden und arbeitsbereichsseitig verlaufenden Längsachse A ausgebildet. Der Verlauf der Längsachse A ist gerade dadurch definiert, dass die Arbeitsbereiche beidseitig hiervon sich erstrecken. Bei sich in Richtung der Längsachse durchdringenden Arbeitsbereichen verläuft die Längsachse entsprechend einer Mittellinie. Beim Ausführungsbeispiel liegen die Arbeitsbereiche in Form von Schneidenspitzen in der Längsachse A aufeinander. Sie können aber auch, unter Ausbildung eines Abstandsbereiches der Arbeitsbereiche etwa, bezüglich der Längsachse A gleich weit voneinander entfernt sein.

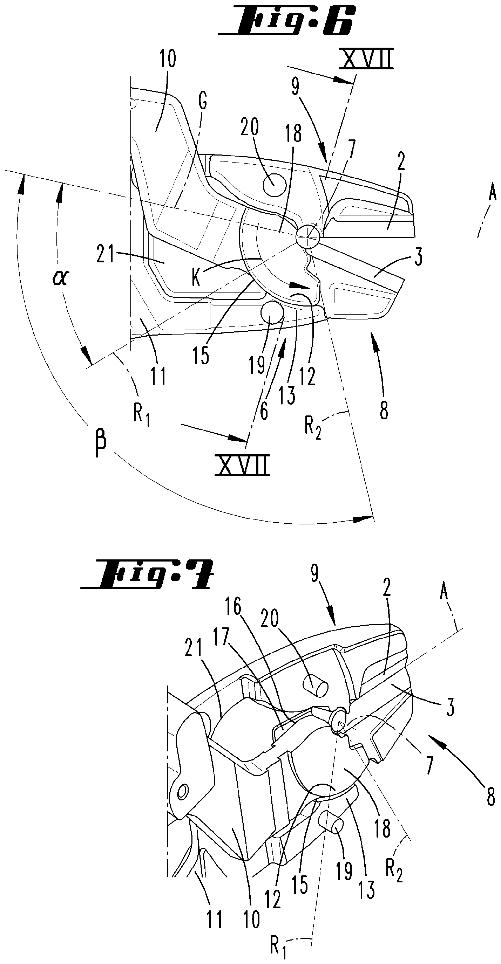

Weiter sind an beiden Zangenschenkeln 4, 5 zur Drehführung und Aufnahme von Spreizkräften in radialer Richtung bezüglich der Drehachse 7 zusammenwirkende Stützausformungen 12, 13, vgl. hierzu etwa Figuren 6, 7 vorgesehen. Die Stützausformungen 12, 13 dienen bevorzugt nur zur Aufnahme von Spreizkräften zur Schwenkführung der Zangenschenkel zueinander. Die Stützausformungen 12, 13, hinsichtlich der konkret zusammenwirkenden Flächen dieser Stützausformungen, verlaufen hinsichtlich der genannten Flächen in der Draufsicht in einer Kreisbahn mit dem Mittelpunkt um die Drehachse.

Der erste bewegliche Zangenschenkel 4 ist auch durch ein nur an dem zweiten festen Zangenschenkel 5 gehaltenes Übergriffteil 14, zur Halterung der Zangenschenkel aneinander, überdeckt.

Nach Entfernen des Übergriffteils 14 können die Zangenschenkel 4, 5 bevorzugt in Richtung der Drehachse 7 ohne Weiteres voneinander entfernt werden. Jedenfalls dann, wenn nicht der weiter vorne schon angesprochene Hinterschnitt ausgebildet ist.

Die Stützausformungen 12, 13 sind auch bei diesem konkreten Ausführungsbeispiel bezogen auf die Gerade G und hiervon ausgehendem Kreisbogen K nur einseitig dieses Kreisbogens K ausgebildet. Der Kreisbogen K ist auf der Seite der Geraden G gezogen, auf welcher sich der feststehende Zangenschenkel 5 befindet. Beim Ausführungsbeispiel und bevorzugt allgemein ist dies auch diejenige Seite, zu welcher hin der Arbeitsbereich des ersten, beweglichen Zangenschenkels beim Öffnen der Zange, etwa also bei einer Bewegung aus der Stellung gemäß Figur 7 in die Stellung gemäß Figur 6, ausschwenkt.

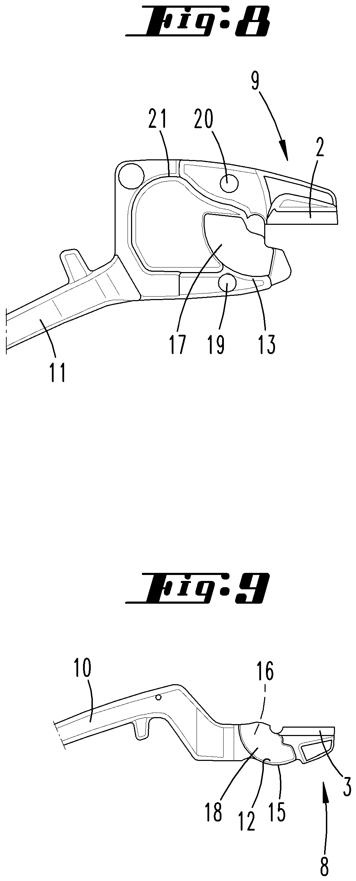

Die Stützausformung 12 an dem ersten Zangenschenkel 4 ist bezogen auf die genannte Drehachse 7 und wiederum in Hinsicht auf die angesprochene Draufsicht lediglich an einer radial äußeren Randkante 15 dieses Zangenschenkels ausgebildet, wie sich auch insbesondere aus Figur 9 ergibt. Die Randkante 15 hat in diesem Bereich einen Radius, der von der Drehachse 7 bezogen wiederum auf die Draufsicht ausgehend gebildet ist.

Die Stützausformungen 12, 13 nehmen die Kräfte der Zange auf, wenn die Arbeitsbereiche auf ein Werkstück einwirken und sich das Bestreben der Zangenschenkel bezogen auf die Drehachse einstellt, sich radial voneinander zu entfernen.

Die Stützausformungen 12, 13 sind bevorzugt nur in einem bestimmten Winkelbereich, zwischen den Winkeln α und β ausgebildet. Die Winkel α und β sind ausgehend von der Geraden G abgetragen, auf der Seite, auf welcher bei den Griffbereichen der Griffbereich des feststehenden Zangenschenkels 5 angeordnet ist. Konkret kann die Stützausformung 13 zwischen den Radialen R₁ und R₂ ausgebildet sein. Die Stützausformung 12 hat dagegen bevorzugt eine größere Winkelabmessung, betrachtet über den Bereich, der im Zuge einer Öffnungsbewegung der Zange mit der Stützausformung 13 in Berührung kommen kann.

Andererseits kann auch in gleicher Weise die Stützausformung 13 mit einer größeren Winkelabmessung ausgebildet sein und die Stützausformung 12 mit einer entsprechend kleineren Winkelausformung.

Die Stützausformungen 12, 13 sind gemäß einer Ausführungsform sich nur in Richtung der Drehachse erstreckend ausgebildet. Dies betrifft die Stützausformungen welche die genannten Spreizkräfte aufnehmen. Darüber hinaus sind durch den Bereich etwa des ersten Zangenschenkels der unterseitig an dem Übergriffteil anliegt oder der auf dem Gelenkbereich des zweiten Zangenschenkels ebenflächig aufliegt, auch noch Kräfte aufnehmbar. Bei Fehlen der genannten Stützausformungen könnten aber die hauptsächlich in der genannten Spreizrichtung gegebenen Beanspruchungen der Zange nicht aufgenommen werden, so dass die Zange nicht funktionsfähig wäre.

Zwischen den Stützausformungen 12, 13 und der Drehachse 7, in radialer Richtung gesehen, liegen die Zangenschenkel lediglich ebenflächig aufeinander. Im Einzelnen ist an dem ersten Zangenschenkel eine etwa kreisbogenabschnittsförmig sich erstreckende erste Planfläche 16 ausgebildet (Figur 9) die auf einer zweiten Planfläche 17 (Figur 8) des zweiten Zangenschenkels, die hinsichtlich ihres Grundrisses, gesehen in Richtung der Drehachse, etwa gleichförmig zu der Planfläche 16 gebildet ist, bei Benutzung aufliegt.

Weiter weist der erste Zangenschenkel 4 die bereits angesprochene obere, dritte Planfläche 18 auf, mit welcher er mit einer Unterseite des Übergriffteils 14 zusammenwirkt.

Das Übergreifteil 14 ist im Einzelnen, wie etwa aus Figur 3 auch ersichtlich, als im Wesentlichen ebenflächiges Plattenteil ausgebildet. Es ist mittels, bevorzugt zweier, Verbindungsmitteln 19, 20, wobei es sich bevorzugt um Schrauben, angeformte Verbindungselemente oder Nieten handeln kann, mit dem zweiten Zangenschenkel 5 verbunden. Entsprechend befinden sich bei der Ausbildung der Verbindungsmittel 19, 20 als Schrauben in dem zweiten Zangenschenkel an der entsprechenden Stelle Gewindebohrungen.

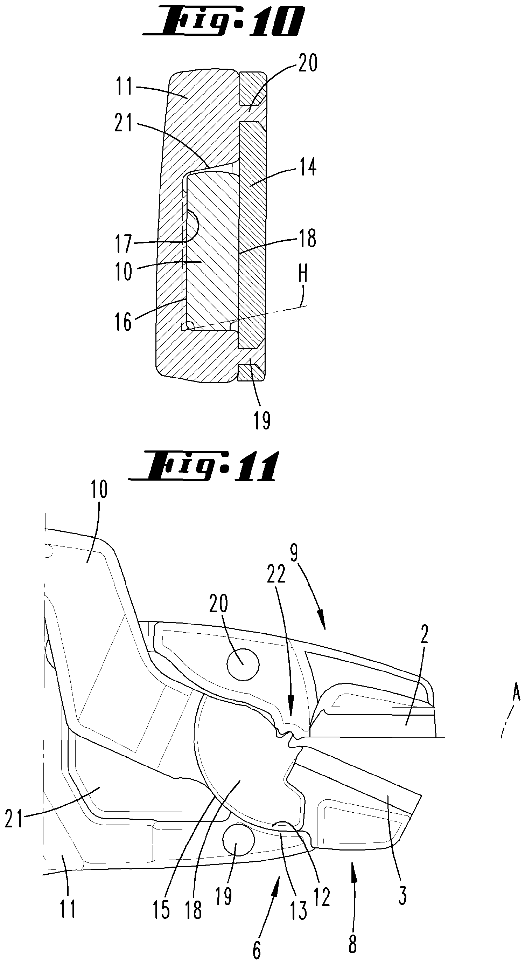

Die Darstellungen insbesondere der Figuren 10, 14, 15 und 17 zeigen jeweils den sich zwischen der Drehachse und einer Stützausformung 13 des feststehenden Zangenschenkels erstreckenden Abschnitt des beweglichen Zangenschenkels.

Bei der Darstellung der Figur 10 sind Nieten 19, 20 verwirklicht. Entsprechend der Linie H kann abweichend von der konkreten Darstellung der Figur 10 auch ein Verlauf der sich in diesem Querschnitt abbildenden Zusammenwirkungsflächen der Stützausformungen 12 und 13 realisiert sein, der einen spitzen Winkel mit der Drehachse, vgl. gestrichelte Linie A, einschließt. Es handelt sich in diesem Fall dann um die weiter vorne bereits angesprochene Hinterschneidung.

Die Stützausformung 13 ist weiter bevorzugt bei einer Draufsicht auf die Zange entsprechend Figur 6 oder Figur 7 zwischen Radialen R₁ und R₂ ausgebildet, ausgehend von der Drehachse und auf der Seite der Kreisbahn K, die Kreisbahn K durchsetzend.

Die Ausgestaltung der Zange 1 ist weiter so vorgesehen, dass der zweite Zangenschenkel 5 bei fehlendem Eingriff der Zangenschenkel 4, 5 im Bereich der Drehachse 7 ein Herausziehen des ersten Zangenschenkels 4 aus dem zweiten Zangenschenkel 5 ohne Entfernen des Übergriffteils 14 ermöglicht. Dies ermöglicht ersichtlich damit auch eine vorteilhafte Montage.

Zwar ist der zweite Zangenschenkel 5, wie etwa aus Figur 8 ersichtlich, insgesamt im Gelenkbereich wannenartig gestaltet, mit einem jedenfalls griffseitig durchlaufenden Wannenrand 21. Da aber die zweite Planfläche 17 eine gleiche Höhe aufweist wie der Wannenrand 21, ist das genannte Entfernen ohne Weiteres möglich.

Die genannte wannenartige Gestaltung hat allerdings auch Bedeutung für den Fall, dass das genannte Entfernen nicht möglich ist. In diesem Fall kann die Zusammenwirkungsebene zwischen der zweiten Planfläche 17 und der ersten Planfläche 16 gegenüber einer sich gleichfalls rechtwinklig zu der Drehachse 7 erstreckenden oberen Abschlussebene des Wannenrandes 21 versenkt, im Hinblick auf die Draufsicht gemäß Figur 8 also nach unten verschoben, ausgebildet sein.

Abweichend von der Gestaltung der Figuren 2 bis 10 kann entsprechend Figur 11 auch ein Verzahnungseingriff 22 im Bereich der Drehachse vorgesehen sein.

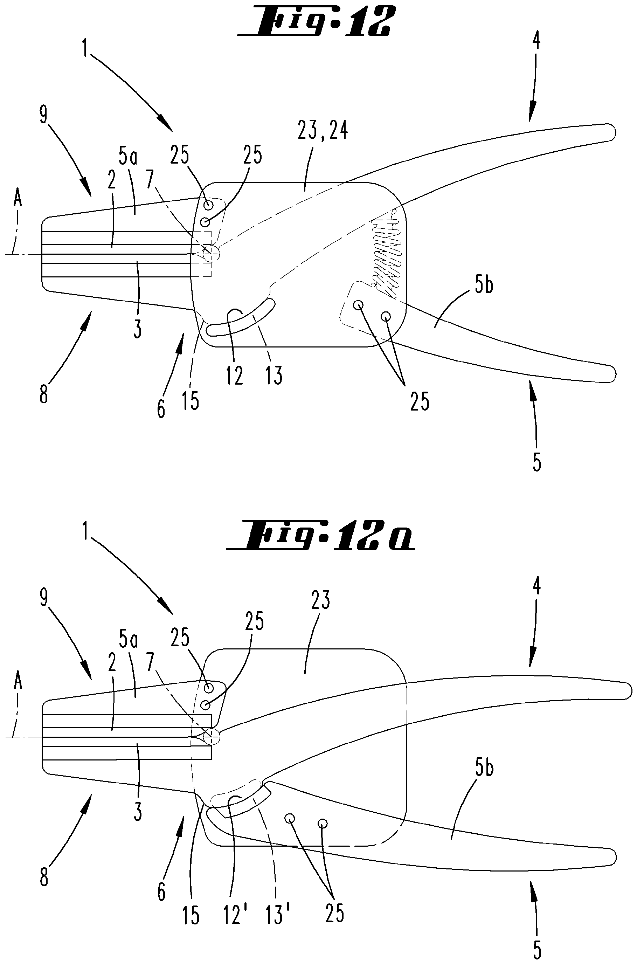

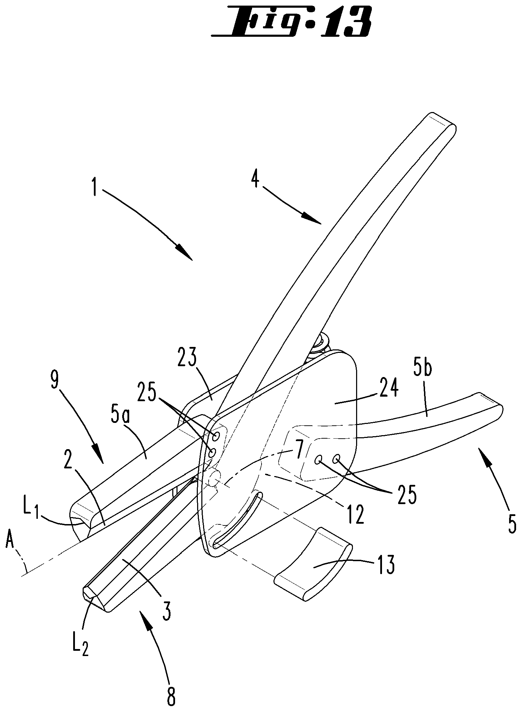

Mit Bezug zu den Figur 12 und 13 ist eine prinzipielle Ausgestaltung der Zange 1 dargestellt, bei welcher die Zangenschenkel 4, 5 gemeinsam zwischen zwei Plattenteilen 23, 24 angeordnet und gehaltert sind. Hierbei können die Plattenteile 23, 24 durch Verbindungsmittel 25 unmittelbar oder mittelbar gegeneinander gehaltert sein. Es kann aber auch der feststehende Zangenschenkel 5 - nur - an dem Plattenteil 23 befestigt sein und das Plattenteil 24 wiederum nur an dem feststehenden Zangenschenkel eben unter Zwischenlage des beweglichen Zangenschenkels 4.

Wesentlich ist, dass der feststehende Zangenschenkel 5 in zwei Teilbereiche 5a und 5b aufgeteilt ist. Die Verbindung zwischen den Teilbereichen 5a und 5b kann nur über ein Plattenteil 23 bzw. 24 gegeben sein. Die Plattenteile 23, 24 können unmittelbar gegeneinander verbunden sein, sie können aber auch nur über den feststehenden Zangenschenkel 5 bzw. die Teilbereiche 5a und 5b miteinander verbunden sein.

Bei der Ausführungsform der Figur 12a ist noch ein weiteres Merkmal verwirklicht, das auch unabhängig von der Ausführungsform der Figur 12 bzw. 12a Bedeutung haben kann. Dieses Merkmal besteht darin, dass bezüglich der Stützausformung 12 und/oder 13 ein in den beweglichen Zangenschenkel 4 bzw. den feststehenden Zangenschenkel 5, beim Ausführungsbeispiel der Figur 12a das Teil 5a des feststehenden Zangenschenkels 5, ein gesondertes Teil 12' und/oder 13' eingesetzt ist oder mit dem Teilbereich 5a verbunden ist. Es kann formschlüssig eingesetzt sein. Hierdurch ist es möglich, im Hinblick auf die besonderen Beanspruchungen unterliegenden Zusammenwirkungsbereiche 12, 13 von dem jeweiligen Zangenschenkel 4, 5, unterschiedliche Materialien einzusetzen. Beispielsweise kann das Teil 12' und/oder das Teil 13' auch ein Polyamidteil sein oder ein sonstiges Kunststoffteil, das hinsichtlich einer Aufnahme von Lagerkräften und hinsichtlich Gleitreibung günstig ist. Es kann sich auch um ein Metallteil handeln, das aus einem beispielsweise härteren und/oder glatteren Metall gebildet ist als die Zangenschenkel 4, 5 im Übrigen.

Eine Verbindung der Teile 12' und 13' über das Einsetzen hinaus, ist nicht notwendig. Die Teile können dann durch die Plattenteile 23, 24 gehaltert sein.

Anhand dieser Gestaltung, wenn auch hierauf nicht beschränkt, ist auch erkennbar, dass die Stützausformung 13 auch in Form einer Lagerschale, die auch einsteckbar sein kann, gebildet sein kann. Die Stützausformung 13 muss nicht notwendig unmittelbar mit dem feststehenden Zangenschenkel verbunden gebildet sein. Die Stützausformung 13 kann in diesem Ausführungsbeispiel mit einem oder beiden Plattenteilen 23, 24 verbunden sein.

Die Stützausformung kann insbesondere bei dieser Ausführungsform, aber auch grundsätzlich, rohrabschnittsförmig, gegebenenfalls aus einem tatsächlichen Rohr herausgeschnitten, gebildet sein.

Die Arbeitsbereiche 2, 3 können bei diesem Ausführungsbeispiel, aber auch allgemein, wie durch die Linien L₁, L₂ angedeutet, aufgesteckt oder aufgeschraubt sein, in Längsrichtung der Arbeitsbereiche. Gegebenenfalls können sie im aufgesteckten Zustand mit den zugehörigen Zangenbacken verrastet sein. Es kann auch ein Hinterschnitt ausgebildet sein, so dass die Arbeitsbereiche quer zu der Aufsteckrichtung nicht entnommen werden können.

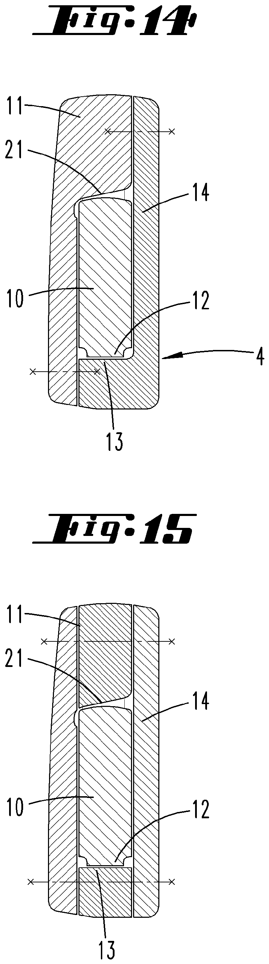

Die Figuren 14 und 15 zeigen Abwandlungen der Darstellung gemäß Figur 10.

Hieraus ist ersichtlich, dass das Übergriffteil 14 auch sogleich die Stützausformung 13 mit ausbilden kann. Durch die feste Verbindung des Übergriffteils 14 mit dem feststehenden Zangenschenkel ist auch somit die Stützausformung 13 durch einen Teil des feststehenden Zangenschenkels gebildet. Hierzu ist ersichtlich das Übergriffteil 14 im Querschnitt abgewinkelt gebildet.

Weiter alternativ, wie aus Figur 15 ersichtlich, können der Bereich der Drehachse und/oder der Bereich der Stützausformung 13 auch als gesondertes Teil, etwa Plattenteil, aufgelegt auf den feststehenden Zangenschenkel und mit diesem verbunden, gebildet sein. Bei dem Übergriffteil 14 kann es hierbei, wie ersichtlich, bei einem einfachen Plattenteil verbleiben.

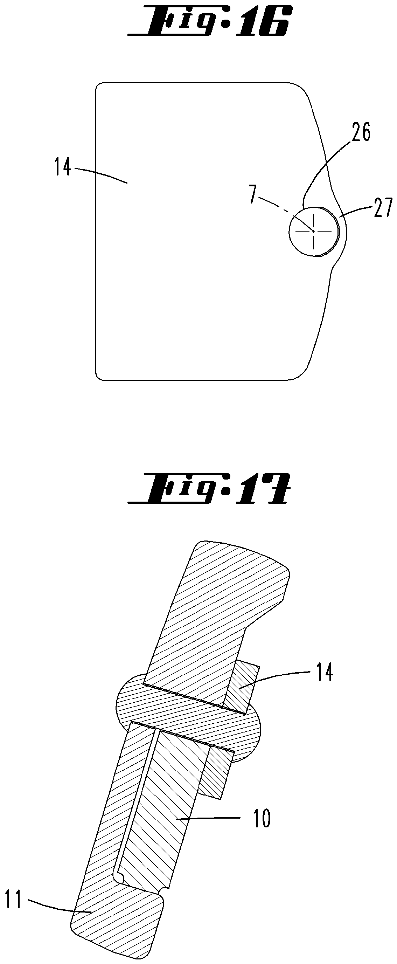

Im Hinblick auf eine Ausbildung der Drehachse als reale Achse, etwa Zylinderkörper, kann auch vorgesehen sein, siehe Figur 16, dass in dem Übergriffteil 14 eine Durchgangsöffnung 26 für die Drehachse ausgebildet ist, die entsprechend bevorzugt allseitig von einem verbleibenden Randabschnitt 27 umgeben ist. Die Drehachse, in eingestecktem Zustand, kann dann beispielsweise mit dem Übergriffteil 14 verstemmt sein, mit diesem verschraubt sein, verschweißt sein oder in sonstiger Weise verbunden sein. Das Übergriffteil ist hierbei nicht mehr notwendig eine Brücke sondern bezüglich des beweglichen Zangenschenkels lediglich ein Auflageteil.

In Figur 17 ist eine diesbezügliche Querschnittsdarstellung wiedergegeben, mit Bezug etwa zu Figur 6. Es ist ersichtlich, dass das Übergriffteil 14 kein Brückenteil mehr ist. Es liegt nur einseitig auf dem feststehenden Zangenschenkel und anderseitig auf dem beweglichen Zangenschenkel auf. Ein Teil des beweglichen Zangenschenkels kann hier bei dieser Querschnittsdarstellung nach oben freiliegend bleiben. Figur 17 zeigt insoweit eine Nietverbindung. Es kann sich in gleicher Weise um eine Schraubverbindung handeln.

**Bezugszeichenliste**

| | | | |
|---|---|---|---|
| 1 | Zange | 23 | Plattenteil |
| 2 | Schneide | 24 | Plattenteil |
| 3 | Schneide | 25 | Verbindungsmittel |
| 4 | erster Zangenschenkel | 26 | Durchgriffsöffnung |
| 5 | zweiter Zangenschenkel | 27 | Randüberdeckung |
| 5a | Teilbereich | | |
| 5b | Teilbereich | | |
| 6 | Gelenkbereich | | |
| 7 | Drehachse | | |
| 8 | Arbeitsbereich | | |
| 9 | Arbeitsbereich | | |
| 10 | Griffschenkel | | |
| 11 | Griffschenkel | | |
| 12 | Stützausformung | | |
| 12' | gesondertes Teil | A | Längsachse |
| 13 | Stützausformung | G | Gerade |
| 13' | gesondertes Teil | H | Linie |
| 14 | Übergriffteil | K | Kreisbahn |
| 15 | Randkante | L₁ | Linie |
| 16 | erste Planfläche | L₂ | Linie |
| 17 | zweite Planfläche | P₁ | äußerster Punkt |
| 18 | dritte Planfläche | P₂ | Punkt |
| 19 | Verbindungsmittel | R₁ | Radiale |
| 20 | Verbindungsmittel | R₂ | Radiale |
| 21 | Wannenrand | α | Winkel |
| 22 | Verzahnungseingriff | β | Winkel |

## Patentansprüche

1. Zange oder Schere, hinsichtlich einer Zange insbesondere in Form einer Schneidzange, Greifzange oder Crimpzange, mit einem ersten und einem zweiten Zangenschenkel (4, 5), welche Zangenschenkel (4, 5) sich in einem Gelenkbereich (6) kreuzen, wobei sie auf einer Seite des Gelenkbereichs (6) zusammenwirkende Arbeitsbereiche (8, 9) ausbilden und auf der anderen Seite des Gelenkbereichs Griffschenkel (10, 11) aufweisen, wobei die Zangenschenkel weiter relativ zueinander um eine feststehende Drehachse (7) drehbar verbunden sind, wobei ein feststehender und ein beweglicher Zangenschenkel (4, 5) ausgebildet ist, wobei der bewegliche Zangenschenkel (4) einen Abschnitt aufweist, der zwischen der Drehachse (7) und einer Stützausformung (12, 13) des feststehenden Zangenschenkels (5) aufgenommen ist, wobei weiter bezüglich des Griffbereichs des beweglichen Zangenschenkels (4) in geschlossener Stellung der Zange (1) und gesehen in einer Draufsicht, in welcher im Gelenkbereich (6) der bewegliche Zangenschenkel (4) oberhalb des feststehenden Zangenschenkels (5) liegt ein in radialer Richtung von der Drehachse (7) gesehen äußerster erster Punkt (P₁) gegeben ist, ggf. an einem dem anderen Griffbereich zugewandten Ende eines Kreisbogenabschnittes, durch welchen ersten Punkt (P₁) und die sich in der Draufsicht als zweiter Punkt (P₂) abbildende Drehachse (7) eine Gerade (G) gezogen werden kann, und wobei weiter an beiden Zangenschenkeln (4, 5) zur Drehführung und Aufnahme von Spreizkräften in radialer Richtung bezüglich der Drehachse (7) zusammenwirkende Stützausformungen (12, 13) vorgesehen sind, **dadurch gekennzeichnet, dass** die Stützausformungen (12, 13) bezogen auf eine von der Geraden (G) ausgehend auf der Seite, auf welcher bei den Griffbereichen der Griffbereich des feststehenden Zangenschenkels (5) angeordnet ist, um die Drehachse gezogene Kreisbahn von bis zu 270 Grad von der Drehachse (7) gesehen nur jenseits dieser Kreisbahn ausgebildet sind.

2. Zange oder Schere nach Anspruch 1, **dadurch gekennzeichnet, dass** die Stützausformung (12) an dem beweglichen Zangenschenkel (4) nur an dessen bezogen auf die Drehachse (7) und in der Draufsicht gesehen radial äußeren Randkante ausgebildet ist.

3. Zange oder Schere nach einem der vorhergehenden Ansprüche, **dadurch gekennzeichnet, dass** bezogen auf die Kreisbahn (K) die Stützausformung (13) des feststehenden Zangenschenkels (5) zwischen Radialen (R₁, R₂), die von der Drehachse (7) ausgehend, ausgebildet ist, wobei die Radialen (R₁, R₂) sich bezogen auf den Winkel der Kreisbahn (K) zwischen einem Kreiswinkel von 20 und 90 Grad bis hin zu einem Kreiswinkel zwischen 140 und 170 Grad die Kreisbahn (K) durchsetzen.

4. Zange oder Schere nach einem der vorhergehenden Ansprüche, **dadurch gekennzeichnet, dass** die Zangenschenkel (4, 5) in Richtung der Drehachse (7) in dem Gelenkbereich zwischen zwei unmittelbar oder mittelbar miteinander verbundenen Halterungsteilen gefasst sind.

5. Zange oder Schere nach einem der vorhergehenden Ansprüche, **dadurch gekennzeichnet, dass** der bewegliche Zangenschenkel (4) in Richtung der Drehachse (7) zwischen dem feststehenden Zangenschenkel (5) und einem daran befestigten Halterungsteil gefasst ist.

6. Zange oder Schere nach einem der vorhergehenden Ansprüche, **dadurch gekennzeichnet, dass** die Drehachse (7) und/oder die Stützausformung (13) des feststehenden Zangenschenkels (5) als Steckteil (12) ausgebildet ist.

7. Zange oder Schere nach einem der vorhergehenden Ansprüche, **dadurch gekennzeichnet, dass** eine oder beide zusammenwirkende Stützausformungen (12, 13) bezüglich der anderen Stützausformung (12, 13) einen Hinterschnitt ausbilden.

8. Zange oder Schere nach einem der vorhergehenden Ansprüche, **dadurch gekennzeichnet, dass** die Stützausformungen (12, 13) nur in Richtung der Drehachse (7) sich erstreckend ausgebildet sind.

9. Zange oder Schere nach einem der vorhergehenden Ansprüche, **dadurch gekennzeichnet, dass** die Zangenschenkel (4, 5) zumindest bereichsweise zwischen den Stützausformungen (12, 13) und der gegebenenfalls durch einen Achskörper gebildeten Drehachse (7) ebenflächig aufeinanderliegen.

10. Zange oder Schere nach einem der vorhergehenden Ansprüche, **dadurch gekennzeichnet, dass** der zweite Zangenschenkel (5) bei fehlendem Eingriff der Zangenschenkel (4, 5) im Bereich der Drehachse (7) ein Herausziehen des ersten Zangenschenkels (4) aus dem zweiten Zangenschenkel (5) ohne Entfernen des Übergriffteils (14) ermöglicht.

11. Zange oder Schere nach einem der vorhergehenden Ansprüche, **dadurch gekennzeichnet, dass** die Drehachse (7) durch einen in eine entsprechende Ausformung des ersten und/oder zweiten Zangenschenkels (4, 5) und/oder ein oder zwei Halterungsteile eingreifenden Körper, der zumindest teilweise über seinen Umfang zylindrisch oder mit einer Zahnung versehen ist, gebildet ist und/oder, dass die Drehachse (7) durch eine an dem ersten oder zweiten Zangenschenkel (4, 5) ausgebildete vorstehende und mit einer entsprechenden Ausnehmung an dem zweiten oder ersten Zangenschenkel (4, 5) zusammenwirkende Zylinderausformung oder Verzahnung gegeben sein.

## Claims

1. Pliers or shears, with regard to pliers in particular in the form of cutting pliers, gripping pliers or crimping pliers, comprising a first and a second plier handle (4, 5), which plier handles (4, 5) intersect one another in a joint region (6), said handles forming interacting operating zones (8, 9) on one side of the joint region (6) and comprising gripping handles (10, 11) on the other side of the joint region, the plier handles also being connected so as to be rotatable relative to one another about a swivel pin (7), one fixed and one movable plier handle (4, 5) being formed, the movable plier handle (4) comprising a portion which is received between the swivel pin (7) and a support shaping (12, 13) of the fixed plier handle (5), a first point (P₁) that is outermost when viewed in the radial direction from the swivel pin (7) and is optionally located on an end of an arced portion, which end faces the other gripping region, furthermore being formed relative to the gripping region of the movable plier handle (4) when the pliers (1) are closed and when viewed in a plan view in which the movable plier handle (4) is located above the fixed plier handle (5) in the joint region (6), through which first point (P₁) and the swivel pin (7), which forms a second point (P₂) when viewed in plan view, a straight line (G) can be drawn, and interacting support shapings (12, 13) further being provided on the two plier handles (4, 5) as swivel guides and to absorb expansion forces in the radial direction relative to the swivel pin (7), **characterised in that**, viewed from the swivel pin (7), relative to a circular path of up to 270 degrees which extends around the swivel pin from the side of the straight line (G) on which the gripping region of the fixed plier handle (5) is arranged at the gripping regions, the support shapings (12, 13) are formed only beyond said circular path.

2. Pliers or shears according to claim 1, **characterised in that** the support shaping (12) on the movable plier handle (4) is formed only on the radially outer peripheral edge thereof relative to the swivel pin (7) and viewed in plan view.

3. Pliers or shears according to either of the preceding claims, **characterised in that**, relative to the circular path (K), the support shaping (13) of the fixed plier handle (5) is formed between radials (R₁, R₂) which begin at the swivel pin (7), the radials (R₁, R₂) passing through the circular path (K) between an inscribed angle of from 20 to 90 degrees and an inscribed angle of between 140 and 170 degrees, relative to the angle of the circular path (K).

4. Pliers or shears according to any of the preceding claims, **characterised in that** the plier handles (4, 5) are gripped, in the direction of the swivel pin (7) and in the joint region, between two directly or indirectly interconnected mounting parts.

5. Pliers or shears according to any of the preceding claims, **characterised in that** the movable plier handle (4) is gripped, in the direction of the swivel pin (7), between the fixed plier handle (5) and a mounting part fastened thereto.

6. Pliers or shears according to any of the preceding claims, **characterised in that** the swivel pin (7) and/or the support shaping (13) of the fixed plier handle (5) is designed as an insertion part (12).

7. Pliers or shears according to any of the preceding claims, **characterised in that** one or both interacting support shapings (12, 13) form an undercut relative to the other support shaping (12, 13).

8. Pliers or shears according to any of the preceding claims, **characterised in that** the support shapings (12, 13) extend only towards the swivel pin (7).

9. Pliers or shears according to any of the preceding claims, **characterised in that** the plier handles (4, 5) rest on one another in a planar manner at least in regions between the support shapings (12, 13) and the swivel pin (7), which is optionally formed by an axial body.

10. Pliers or shears according to any of the preceding claims, **characterised in that**, when the plier handles (4, 5) do not engage, the second plier handle (5) allows the first plier handle (4) to be removed from the second plier handle (5) in the region of the swivel pin (7) without removing the overlapping part (14).

11. Pliers or shears according to any of the preceding claims, **characterised in that** the swivel pin (7) is formed by a body which engages in a corresponding recess of the first and/or second plier handle (4, 5) and/or in one or two mounting parts, and the periphery of which body is cylindrical or is provided with toothing at least in part, and/or **in that** the swivel pin (7) is formed by a cylindrical shaping or toothing which protrudes from the first or second plier handle (4, 5) and interacts with a corresponding recess on the first or second plier handle (4, 5).

## Revendications

1. Pince ou ciseaux, concernant une pince en particulier sous la forme d'une pince coupante, d'une pince de préhension ou d'une pince à sertir, comprenant des première et seconde branches de pince (4, 5), lesquelles branches de pince (4, 5) se croisent dans une région d'articulation (6), dans laquelle elles forment sur un côté de la région d'articulation (6) des régions de travail (8, 9) coopérant ensemble, et présentent de l'autre côté de la région d'articulation des branches formant poignées (10, 11), dans laquelle les branches de pince sont en outre reliées de manière pivotante l'une par rapport à l'autre autour d'un axe de rotation fixe (7), dans laquelle les branches de pince (4, 5) sont formées l'une fixe et l'autre mobile, dans laquelle la branche de pince mobile (4) présente un tronçon qui est reçu entre l'axe de rotation (7) et une formation d'appui (12, 13) de la branche de pince fixe (5), dans laquelle en outre, par rapport à la région de poignée de la branche de pince mobile (4) dans la position fermée de la pince (1) et d'après une vue de dessus dans laquelle, dans la région d'articulation (6), la branche de pince mobile (4) est située au-dessus de la branche de pince fixe (5), est procuré, en regardant en direction radiale depuis l'axe de rotation (7), un premier point le plus extérieur (P₁), le cas échéant à une extrémité d'une portion circulaire en regard de l'autre région de poignée, une droite (G) pouvant être tracée par le premier point (P₁) et l'axe de rotation (7) se représentant comme un deuxième point (P₂) dans la vue de dessus, et dans laquelle en outre des formations d'appui (12, 13) sont prévues au niveau des deux branches de pince (4, 5), lesquelles coopèrent ensemble pour le guidage en rotation et la réception de forces d'écartement en direction radiale par rapport à l'axe de rotation (7), **caractérisés en ce que**, par rapport à une trajectoire circulaire autour de l'axe de rotation qui vu depuis l'axe de rotation (7) s'étend sur jusqu'à 270 degrés à partir de la droite (G), dans les régions de poignées, du côté où est agencée la région de poignée de la branche de pince fixe (5), les formations d'appui (12, 13) sont formées uniquement au-delà de cette trajectoire circulaire.

2. Pince ou ciseaux selon la revendication 1, **caractérisés en ce que**, regardé dans la vue de dessus, la formation d'appui (12) sur la branche de pince mobile (4) est formée uniquement au niveau de son bord périphérique extérieur radial par rapport à l'axe de rotation (7).

3. Pince ou ciseaux selon l'une des revendications précédentes, **caractérisés en ce que**, par rapport à la trajectoire circulaire (K), la formation d'appui (13) de la branche de pince fixe (5) est formée entre des radiales (R₁, R₂) à partir de l'axe de rotation (7), dans laquelle les radiales (R₁, R₂), par rapport à l'angle de la trajectoire circulaire (K), traversent la trajectoire circulaire (K) entre un angle circulaire de 20 et 90 degrés jusqu'à un angle circulaire compris entre 140 et 170 degrés.

4. Pince ou ciseaux selon l'une des revendications précédentes, **caractérisés en ce que**, dans la région d'articulation, les branches de pince (4, 5) sont maintenues dans la direction de l'axe de rotation (7) entre deux éléments de maintien reliés ensemble directement ou indirectement.

5. Pinces ou ciseaux selon l'une des revendications précédentes, **caractérisés en ce que** la branche de pince mobile (4), dans la direction de l'axe de rotation (7), est prise entre la branche de pince fixe (5) et une pièce de maintien fixée à celle-ci.

6. Pince ou ciseaux selon l'une des revendications précédentes, **caractérisés en ce que** l'axe de rotation (7) et/ou la formation d'appui (13) de la branche de pince fixe (5) est/sont conçu(s) sous la forme d'un élément enfichable (12).

7. Pinces ou ciseaux selon l'une des revendications précédentes, **caractérisés en ce qu'**une ou les deux formations d'appui qui coopèrent ensemble (12, 13) forme(nt) une contre-dépouille par rapport à l'autre formation d'appui (12, 13).

8. Pinces ou ciseaux selon l'une des revendications précédentes, **caractérisés en ce que** les formations d'appui (12, 13) sont formées de manière à s'étendre uniquement dans la direction de l'axe de rotation (7).

9. Pince ou ciseaux selon l'une des revendications précédentes, **caractérisés en ce que** les branches de pinces (4, 5) reposent à plat l'une contre l'autre au moins par endroits entre les formations d'appui (12, 13) et l'axe de rotation (7) formé le cas échéant par un corps d'axe.

10. Pince ou ciseaux selon l'une des revendications précédentes, **caractérisés en ce que** la seconde branche de pince (5), en l'absence d'engagement des branches de pince (4, 5) dans la région de l'axe de rotation (7), permet un retrait de la première branche de pince (4) hors de la seconde branche de pince (5) sans enlèvement de la pièce d'empiétement par-dessus (14).

11. Pince ou ciseaux selon l'une des revendications précédentes, **caractérisés en ce que** l'axe de rotation (7) est formé par un corps engageant un façonnement correspondant de la première et/ou de la seconde branche de pince (4, 5) et/ou une ou deux parties de support, lequel corps est prévu cylindrique au moins partiellement sur sa circonférence ou avec une denture, et/ou **en ce que** l'axe de rotation (7) est fourni par une denture ou une formation cylindrique formée en saillie sur la première ou seconde branche de pince (4, 5) et coopérant avec une cavité correspondante au niveau de la seconde ou première branche de pince (4, 5).
